# EUROPEAN PATENT APPLICATION

(11) **EP 4 823 029 A1**
(43) Date of publication of application: **14.10.2026**
(21) Application number: 24916623.2
(22) Date of filing: 05.12.2024
(51) Int. Cl.: H04L 7/00

(54) **DATA SYNCHRONIZATION METHOD, APPARATUS AND SYSTEM**

(30) Priority: 10.01.2024 CN 202410042059
(71) Applicant: Huawei Technologies Co., Ltd., Shenzhen, Guangdong 518129 (CN)
(72) Inventor: HE, Xiang, Shenzhen, Guangdong 518129 (CN); REN, Hao, Shenzhen, Guangdong 518129 (CN)
(74) Representative: Huawei European IPR
(86) International application number: PCT/CN2024/136970
(87) International publication number: WO 2025/148576

(57) **Abstract**

Embodiments of this application disclose a data synchronization method, an apparatus, and a system. In scenarios where data streams at a physical layer are synchronized, synchronization processes of the data streams may be timed. Further, it is determined whether there is a data stream whose synchronization-process duration satisfies a timeout condition, which is equivalent to determining whether there is a case in which synchronization takes an excessively long time. If such a case exists, it indicates that a system fault or link degradation may have occurred, and corresponding timeout processing needs to be performed, for example, error reporting and system reset, so that the system fault or link degradation can be addressed in a timely manner, thereby improving data transmission efficiency.

## Description

This application claims priority to Chinese Patent Application No. 202410042059.0, filed with the China National Intellectual Property Administration on January 10, 2024 and entitled "DATA SYNCHRONIZATION METHOD, APPARATUS, AND SYSTEM", which is incorporated herein by reference in its entirety.

### TECHNICAL FIELD

Embodiments of this application relate to the field of data communication, and in particular, to a data synchronization method, an apparatus, and a system.

### BACKGROUND

In communication systems, synchronization (Synchronization) has always been a very important technology. Synchronization is used in many scenarios. Depending on differences in implementation objectives, synchronization may be classified into multiple types. For example, clock synchronization is intended to ensure time consistency among different network devices; carrier synchronization is a process of obtaining coherent carriers from received signals in coherent optical transmission; bit synchronization is a process of extracting clock signals from received signals to perform correct sampling and decision on information symbols; and frame synchronization is a process of identifying, from a received data stream, the beginning or end of a specific data block.

In communication systems, synchronization is performed by using a predefined synchronization method or procedure, and therefore the time required for synchronization can be estimated with relatively high accuracy. However, when conditions such as a software bug, a hardware failure or excessive channel noise occur in the communication systems, synchronization may fail to be completed for a relatively long period of time, causing the time required for synchronization to exceed a normal estimated time, thereby affecting data transmission efficiency, resulting in a waste of power consumption and bandwidth.

### SUMMARY

This application provides a data synchronization method, an apparatus, and a system, to perform timing on synchronization processes of data streams, so as to address system faults or link deterioration in a timely manner, thereby improving data transmission efficiency.

According to a first aspect, a data synchronization method is provided. The method is performed at an Ethernet physical layer. Specifically, N data streams at the physical layer are obtained, where N is an integer greater than or equal to 1. Synchronization is performed on each of the N data streams, and a synchronization process of at least one of the N data streams is timed. Any time period between the start of synchronization of each data stream and the completion of synchronization may be considered as a synchronization process of the data stream, and timing any time period in the synchronization process of the data stream may be understood as timing the synchronization process of the data stream. Further, it is determined whether a duration of the synchronization process of at least one of the N data streams satisfies a timeout condition, and if yes, timeout processing is performed.

It should be understood that, in scenarios where synchronization is performed on data streams at the physical layer, synchronization processes of the data streams may be timed in this application. Further, it is determined whether there is a data stream whose synchronization-process duration satisfies the timeout condition, which is equivalent to determining whether there is a case in which synchronization takes an excessively long time. If such a case exists, it indicates that a system fault or link degradation may have occurred, and corresponding timeout processing needs to be performed, for example, error reporting and system reset, so that the system fault or link degradation can be addressed in a timely manner, thereby improving data transmission efficiency.

In some possible implementations, in a scenario in which N>1, timing the synchronization process of the at least one of the N data streams includes: starting a timer upon completion of synchronization of the first one of the N data streams that has completed synchronization, where the timer is used to time synchronization processes of the remaining N-1 data streams other than the first one of the N data streams that has completed synchronization. The duration of the synchronization process of the at least one of the N data streams satisfying the timeout condition includes: the timer expires, and synchronization of the N-1 data streams has not been completed. That is, if the timer expires and synchronization of at least one data stream has not completed, it is determined that the timeout condition is satisfied. In this manner, whether synchronization of the N data streams satisfies the timeout condition can be properly analyzed without starting many timers, achieving a relatively good practical effect.

In some possible implementations, the duration of the synchronization process of the at least one of the N data streams satisfying the timeout condition includes: a duration of synchronization processes of the N data streams is greater than or equal to a first threshold. In a scenario in which N=1, if the duration of the synchronization process of the data stream is greater than or equal to the first threshold, it is determined that the timeout condition is satisfied. In a scenario in which N>1, if an overall duration of the synchronization processes of the N data streams is greater than or equal to the first threshold, that is, when the timer reaches the first threshold from a synchronization start time of the N data streams and at least one data stream still has not completed synchronization, it is determined that the timeout condition is satisfied. In this manner, it can be effectively analyzed whether there is a case in which synchronization takes an excessively long time among the N data streams, thereby facilitating accurate determination of whether system faults or link deterioration have occurred.

In some possible implementations, in a scenario in which N>1, timing the synchronization process of the at least one of the N data streams includes: timing a synchronization process of each of the N data streams, where the duration of the synchronization process of each of the N data streams has a corresponding threshold. The duration of the synchronization process of the at least one of the N data streams satisfying the timeout condition includes: a duration of the synchronization process of the at least one of the N data streams is greater than or equal to the corresponding threshold. That is, in this implementation, the synchronization process of each data stream is separately timed, and whether a duration of synchronization of each data stream takes an excessively long time is separately determined, so that targeted feedback and handling can be performed on the data stream whose actual synchronization time is excessively long, thereby improving data transmission efficiency.

In some possible implementations, in a scenario in which N>1, the duration of the synchronization process of the at least one of the N data streams satisfying the timeout condition includes: a duration of a synchronization process of a data stream whose synchronization process takes the longest time among the N data streams is greater than or equal to a second threshold. That is, when the timer reaches the second threshold from the synchronization start time of the N data streams, a data stream whose synchronization takes the longest time has not completed synchronization. In this manner, implementation scenarios of this solution are extended.

In some possible implementations, in a scenario in which N>1, the duration of the synchronization process of the at least one of the N data streams satisfying the timeout condition includes: a duration of a synchronization process of the first one of the N data streams that has completed synchronization is greater than or equal to a third threshold. That is, when the timer reaches the third threshold from the synchronization start time of the N data streams, no data stream has yet completed synchronization. In this manner, it is helpful to more quickly determine whether there is a case in which synchronization takes an excessively long time among the N data streams, so that measures can be taken in a timely manner, thereby improving data transmission efficiency.

In some possible implementations, in a scenario in which N>1, timing the synchronization process of the at least one of the N data streams includes: timing the synchronization process of the first one of the N data streams that has completed synchronization, and starting, from a synchronization completion time of the first one of the N data streams that has completed synchronization, timing synchronization processes of the remaining N-1 data streams other than the first one of the N data streams that has completed synchronization. The duration of the synchronization process of the at least one of the N data streams satisfying the timeout condition includes: a duration of the synchronization process of the first one of the N data streams that has completed synchronization is greater than or equal to a third threshold, and/or a duration of the synchronization processes of the N-1 data streams is greater than or equal to a fourth threshold. This implementation enriches implementation scenarios of this solution of determining whether there is a case in which synchronization takes an excessively long time among the N data streams.

In some possible implementations, in a scenario in which N>1, the duration of the synchronization process of the at least one of the N data streams satisfying the timeout condition includes: a duration of a synchronization process of the first one of the N data streams that has completed synchronization is greater than or equal to a third threshold, and/or a difference obtained by subtracting the duration of the synchronization process of the first one of the N data streams that has completed synchronization from a duration of a synchronization process of a data stream whose synchronization process takes the longest time among the N data streams is greater than or equal to a fourth threshold. This implementation enriches implementation scenarios of this solution of determining whether there is a case in which synchronization takes an excessively long time among the N data streams.

In some possible implementations, in coherent transmission scenarios, the N data streams include a data stream in a first polarization direction and a data stream in a second polarization direction, and the first polarization direction and the second polarization direction are orthogonal to each other. Due to differences between the polarization directions, a skew (skew) may occur between the data stream in the X polarization direction and the data stream in the Y polarization direction during link transmission. At a receiver side, the data streams in the X polarization direction and the Y polarization direction need to be synchronized and aligned respectively before data can be correctly recovered. According to the method provided in this application, it can be determined whether there is a case in which synchronization takes an excessively long time for the data streams in the two polarization directions, so that measures can be taken in a timely manner, and synchronization of the data streams in the two synchronization directions can be completed more quickly and data can be recovered.

In some possible implementations, performing synchronization on each of the N data streams includes at least one of the following operations: performing frame synchronization on each of the N data streams to determine a frame boundary of each of the data streams; performing codeword synchronization on each of the N data streams to determine a codeword boundary of each of the data streams; performing interleaving synchronization on each of the N data streams to determine an interleaving start position of each of the data streams; and performing symbol synchronization on each of the N data streams to determine a symbol group boundary of each of the data streams. Herein, multiple implementations of performing data synchronization at the physical layer are provided, thereby enriching application scenarios of this solution.

In some possible implementations, timing the synchronization process of the at least one of the N data streams includes: timing the synchronization process of the at least one of the N data streams by using a timer. The manner of timing the synchronization process by using the timer is simpler and more direct, and has a better practical effect.

In some possible implementations, timing the synchronization process of the at least one of the N data streams includes: counting, by using a counter, a quantity of bits, a quantity of symbols, or a quantity of data blocks that have passed since a start of the synchronization process of the at least one of the N data streams, to time the synchronization process of the at least one of the N data streams. Herein, the implementation is further provided in which performing counting by using a counter achieves the same effect as timing a synchronization process, thereby improving flexibility of this solution.

In some possible implementations, performing timeout processing includes: reporting an error, resetting a system, restarting a device, and/or restarting synchronization, so that system faults or link degradation can be addressed in a timely manner, thereby improving data transmission efficiency.

In some possible implementations, after performing synchronization on each of the N data streams, the method further includes: performing data processing on the N synchronized data streams, and transmitting, through a channel, the N processed data streams. That is, the method provided in this application is applicable to a synchronization process on a data transmitter side.

In some possible implementations, obtaining the N data streams at the physical layer includes: receiving the N data streams transmitted through a channel. After performing synchronization on each of the N data streams, the method further includes: performing data processing on the N synchronized data streams. That is, the method provided in this application is applicable to a synchronization process on the data receiver side.

According to a second aspect, this application provides a communications apparatus. The communications apparatus includes an obtaining unit and a processing unit. The obtaining unit is configured to obtain N data streams at a physical layer, where N is an integer greater than or equal to 1. The processing unit is configured to: perform synchronization on each of the N data streams, and time a synchronization process of at least one of the N data streams; and if a duration of the synchronization process of the at least one of the N data streams satisfies a timeout condition, perform timeout processing.

In some possible implementations, N>1, the processing unit is specifically configured to start a timer upon completion of synchronization of the first one of the N data streams that has completed synchronization, where the timer is used to time synchronization processes of the remaining N-1 data streams other than the first one of the N data streams that has completed synchronization. The duration of the synchronization process of the at least one of the N data streams satisfying the timeout condition includes: the timer expires, and synchronization of the N-1 data streams has not been completed.

In some possible implementations, the duration of the synchronization process of the at least one of the N data streams satisfying the timeout condition includes: a duration of synchronization processes of the N data streams is greater than or equal to a first threshold.

In some possible implementations, N>1, and the processing unit is specifically configured to time a synchronization process of each of the N data streams, where the synchronization duration of each of the N data streams has a corresponding threshold. The duration of the synchronization process of the at least one of the N data streams satisfying the timeout condition includes: the duration of the synchronization process of the at least one of the N data streams is greater than or equal to the corresponding threshold.

In some possible implementations, N>1, and the duration of the synchronization process of the at least one of the N data streams satisfying the timeout condition includes: a duration of a synchronization process of a data stream whose synchronization process takes the longest time among the N data streams is greater than or equal to a second threshold, and/or a duration of a synchronization process of the first one of the N data streams that has completed synchronization is greater than or equal to a third threshold.

In some possible implementations, N>1, and the processing unit is specifically configured to time a synchronization process of the first one of the N data streams that has completed synchronization, and start, from a synchronization completion time of the first one of the N data streams that has completed synchronization, timing synchronization processes of the remaining N-1 data streams other than the first one of the N data streams that has completed synchronization. The duration of the synchronization process of the at least one of the N data streams satisfying the timeout condition includes: a duration of the synchronization process of the first one of the N data streams that has completed synchronization is greater than or equal to a third threshold, and/or a duration of the synchronization processes of the N-1 data streams is greater than or equal to a fourth threshold.

In some possible implementations, N>1, and the duration of the synchronization process of the at least one of the N data streams satisfying the timeout condition includes: a duration of a synchronization process of the first one of the N data streams that has completed synchronization is greater than or equal to a third threshold, and/or a difference obtained by subtracting the duration of the synchronization process of the first one of the N data streams that has completed synchronization from a duration of a synchronization process of a data stream whose synchronization process takes the longest time among the N data streams is greater than or equal to a fourth threshold.

In some possible implementations, the N data streams include a data stream in a first polarization direction and a data stream in a second polarization direction, where the first polarization direction and the second polarization direction are orthogonal to each other.

In some possible implementations, the processing unit is specifically configured to perform at least one of the following operations: performing frame synchronization on each of the N data streams to determine a frame boundary of each of the data streams; performing codeword synchronization on each of the N data streams to determine a codeword boundary of each of the data streams; performing interleaving synchronization on each of the N data streams to determine an interleaving start position of each of the data streams; and performing symbol synchronization on each of the N data streams to determine a symbol group boundary of each of the data streams.

In some possible implementations, the processing unit is specifically configured to time the synchronization process of the at least one of the N data streams by using a timer.

In some possible implementations, the processing unit is specifically configured to count, by using a counter, a quantity of bits, a quantity of symbols, or a quantity of data blocks that have passed since a start of the synchronization process of the at least one of the N data streams, to time the synchronization process of the at least one of the N data streams.

In some possible implementations, the processing unit is specifically configured to report an error, reset a system, restart a device, and/or restart synchronization.

In some possible implementations, the communication apparatus further includes a sending unit. The processing unit is further configured to perform data processing on the N synchronized data streams. The sending unit is configured to transmit, through a channel, the N processed data streams.

In some possible implementations, the obtaining unit is specifically configured to receive the N data streams transmitted through a channel. The processing unit is further configured to perform data processing on the N synchronized data streams.

According to a third aspect, this application provides a chip. The chip includes a processor, configured to perform the method described in any implementation of the first aspect.

According to a fourth aspect, this application provides an optical module. The optical module includes a processor and an interface circuit. The interface circuit is configured to send and receive data. The processor is configured to perform the method described in any implementation of the first aspect.

According to a fifth aspect, this application provides a host module. The host module includes a processor and an interface circuit. The interface circuit is configured to send and receive data. The processor is configured to perform the method described in any implementation of the first aspect.

According to a sixth aspect, this application provides a transmitter device. The transmitter device includes a processor and an interface circuit. The processor is configured to perform the method described in any implementation of the first aspect, and perform data processing on a synchronized data stream. The interface circuit is configured to transmit, through a channel, the processed data stream.

According to a seventh aspect, this application provides a receiver device. The receiver device includes a processor and an interface circuit. The interface circuit is configured to receive a data stream transmitted through a channel. The processor is configured to perform the method described in any implementation of the first aspect, and perform data processing on a synchronized data stream.

According to an eighth aspect, this application provides a communication system. The communication system includes the transmitter device described in the sixth aspect and the receiver device described in the seventh aspect.

According to a ninth aspect, this application provides a computer-readable storage medium. The computer-readable storage medium stores instructions. When the instructions are executed by a computer, the method described in any implementation of the first aspect is implemented.

According to a ninth aspect, this application provides a computer program product. The computer program product includes program instructions. When the computer program product is executed, the method described in any implementation of the first aspect is implemented.

It can be learned from the foregoing technical solution that this application has the following advantages:

In scenarios of synchronizing data streams at the physical layer, this application provides the data synchronization method capable of timing synchronization processes of data streams. Further, it is determined whether there is a data stream whose synchronization-process duration satisfies the timeout condition, which is equivalent to determining whether there is a case in which synchronization takes an excessively long time. If such a case exists, it indicates that a system fault or link degradation may have occurred, and corresponding timeout processing needs to be performed, for example, error reporting and system reset, so that the system fault or link degradation can be addressed in a timely manner, thereby improving data transmission efficiency.

### BRIEF DESCRIPTION OF DRAWINGS

FIG. 1 is a diagram of a communication system to which an embodiment of this application is applied;
FIG. 2 is a diagram of a data transmission process according to an embodiment of this application;
FIG. 3 is a diagram of an implementation of a transmitter data processor according to an embodiment of this application;
FIG. 4 is a schematic flowchart of a data synchronization method according to an embodiment of this application;
FIG. 5 is a diagram of an FEC codeword according to an embodiment of this application;
FIG. 6 is a diagram of an implementation of convolutional interleaving according to an embodiment of this application;
FIG. 7 is a diagram of a first application scenario of synchronization of multiple data streams according to an embodiment of this application;
FIG. 8 is a diagram of a second application scenario of synchronization of multiple data streams according to an embodiment of this application;
FIG. 9 is a diagram of a structure of a communication apparatus according to an embodiment of this application;
FIG. 10 is a diagram of a structure of a transmitter device according to an embodiment of this application; and
FIG. 11 is a diagram of a structure of a receiver device according to an embodiment of this application.

### DESCRIPTION OF EMBODIMENTS

Embodiments of this application provide a data synchronization method, an apparatus, and a system, to perform timing on synchronization processes of data streams. If synchronization takes an excessively long time, it indicates that system faults or link deterioration may occur. In this case, corresponding timeout processing needs to be performed, for example, error reporting and system reset, to cope with the system faults or link deterioration in a timely manner, thereby improving data transmission efficiency.

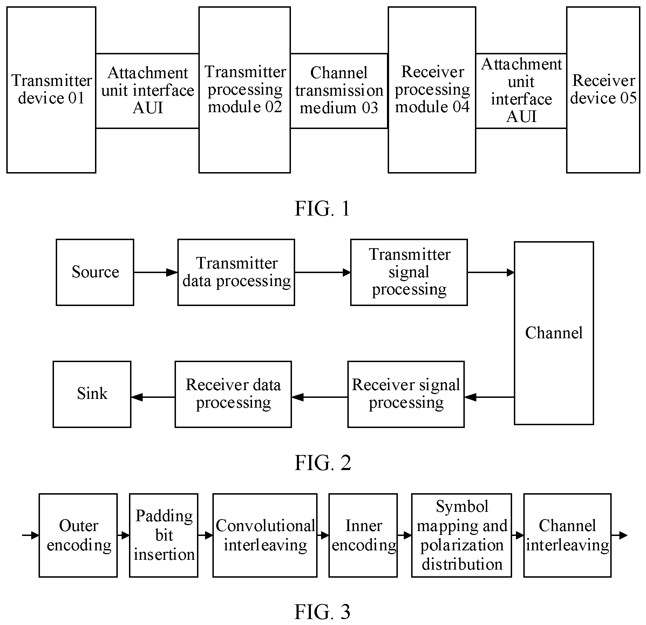

FIG. 1 is a diagram of a communication system to which an embodiment of this application is applied. As shown in FIG. 1, the communication system includes a transmitter device 01, a transmitter processing module 02, a channel transmission medium 03, a receiver processing module 04, and a receiver device 05. For example, the communication system is a data center network. The transmitter device 01 and the receiver device 05 may be devices such as switches or routers. The transmitter device 01 is also referred to as a host device (host device), a host chip (host chip) located at a transmitter side. The receiver device 05 is also referred to as a host device or a host chip located at a receiver side. The channel transmission medium 03 may be an optical fiber. The transmitter device 01 may be connected to the transmitter processing module 02 through an attachment unit interface (attachment unit interface, AUI), and the receiver device 05 may be connected to the receiver processing module 04 through an AUI. The transmitter processing module 02 and the receiver processing module 04 may be optical modules (optical module), electrical modules, connectors (connector), or other modules that process data during data transmission. For example, the processing module may be an 800LR module (800LR module), which is a coherent optical module. In addition, the transmitter device 01, the transmitter processing module 02, the channel transmission medium 03, the receiver processing module 04, and the receiver device 05 in the communication system may all support bidirectional transmission or unidirectional transmission. This is not specifically limited herein.

FIG. 2 is a diagram of a data transmission process according to an embodiment of this application. As shown in FIG. 2, at a transmitter side, a source provides a to-be-transmitted data stream. A transmitter data processor receives the data stream, performs data processing including encoding, interleaving, and modulation on the data stream to obtain a symbol data stream, and transmits the symbol data stream to a transmitter signal processor for framing. After being transmitted through a channel, the symbol data stream arrives at a receiver device. After receiving a distorted signal generated due to noise or other impairments in the channel, the receiver device transmits the distorted signal to a receiver signal processor for operations such as dispersion compensation, synchronization, and phase recovery. Then, the receiver signal processor transmits the signal to a receiver data processor for processing including demodulation, de-interleaving, and decoding. After the processing, original data is restored and sent to a sink. The transmitter data processing and transmitter signal processing shown in FIG. 2 may be applied to the transmitter processing module 02 shown in FIG. 1, and the receiver data processing and receiver signal processing shown in FIG. 2 may be applied to the receiver processing module 04 shown in FIG. 1.

FIG. 3 is a diagram of an implementation of the transmitter data processor according to an embodiment of this application. As shown in FIG. 3, the transmitter data processor may be used in scenarios like concatenated coding, and sequentially performs operations such as outer encoding, padding bit insertion, convolutional interleaving, inner encoding, channel interleaving, symbol mapping, and polarization distribution on input data streams. It should be understood that, in actual application, operations performed by the transmitter data processor include but are not limited to the operations shown in FIG. 3. For example, before convolutional interleaving is performed, scrambling may be performed on encoded data frames obtained through outer encoding.

In some other possible concatenated coding scenarios, as shown in FIG. 1, in the process of transmitting data from the transmitter device 01 to the receiver device 05, the transmitter device 01 is configured to perform outer encoding on the data, and then transmit, to the transmitter processing module 02, outer-encoded data. The transmitter processing module 02 is configured to perform inner encoding on the outer-encoded data, to obtain data that has undergone outer encoding and inner encoding, and transmit, to the channel transmission medium 03, the data that has undergone outer encoding and inner encoding. The channel transmission medium 03 is configured to transmit, to the receiver processing module 04, the data that has undergone outer encoding and inner encoding. The receiver processing module 04 is configured to perform inner decoding on the data that has undergone outer encoding and inner encoding, and transmit, to the receiver device 05, the inner-decoded data. The receiver device 05 is configured to perform outer decoding on the inner-decoded data.

It should be understood that "inner" and "outer" are distinguished only based on a distance between the channel transmission medium 03 and an entity that performs an operation on data. An entity that performs an inner operation is closer to the channel transmission medium, and an entity that performs an outer operation is farther away from the channel transmission medium. In embodiments of this application, the data is sent to the channel transmission medium 03 via the transmitter processing module 02 after being sent from the transmitter device 01, and then is sent from the channel transmission medium 03 to the receiver device 05 via the receiver processing module 04. Data encoded by the transmitter device 01 is farther away from the channel transmission medium 03 than data encoded by the transmitter processing module 02, and data decoded by the receiver device 05 is farther away from the channel transmission medium 03 than data decoded by the receiver processing module 04. Therefore, the data encoded by the transmitter device 01 is referred to as outer-encoded data, the data encoded by the transmitter processing module 02 is referred to as inner-encoded data, the data decoded by the receiver device 05 is referred to as outer-decoded data, and the data decoded by the receiver processing module 04 is referred to as inner-decoded data. In a possible implementation, both the inner encoding and the outer encoding are performed using a forward error correction (forward error correction, FEC) coding scheme, to form a concatenated FEC transmission solution. For example, the transmitter device 01 may use Reed-Solomon (Reed-Solomon, RS) codes for outer encoding, and the transmitter processing module 02 may use Hamming (Hamming) codes for inner encoding. For another example, the transmitter device 01 may use RS codes for outer encoding, and the transmitter processing module 02 may use Bose-Chaudhuri-Hocquenghem (Bose-Chaudhuri-Hocquenghem, BCH) codes for inner encoding. For another example, the transmitter device 01 may use RS codes for outer encoding, and the transmitter processing module 02 may use polar (Polar) codes for inner encoding.

It should be noted that the foregoing content is example description of application scenarios of the data synchronization method provided in embodiments of this application, and does not constitute any limitation on the application scenarios of the data processing method. A person of ordinary skill in the art may learn that, as service requirements vary, the application scenarios of the data synchronization method may be adjusted based on application requirements. Application scenarios are not listed one by one in embodiments of this application.

The method provided in embodiments of this application is mainly performed at an Ethernet physical layer, that is, synchronization is performed on data streams at the Ethernet physical layer and their synchronization processes are timed. If synchronization takes an excessively long time, it indicates that system faults or link deterioration may occur. In this case, corresponding timeout processing needs to be performed.

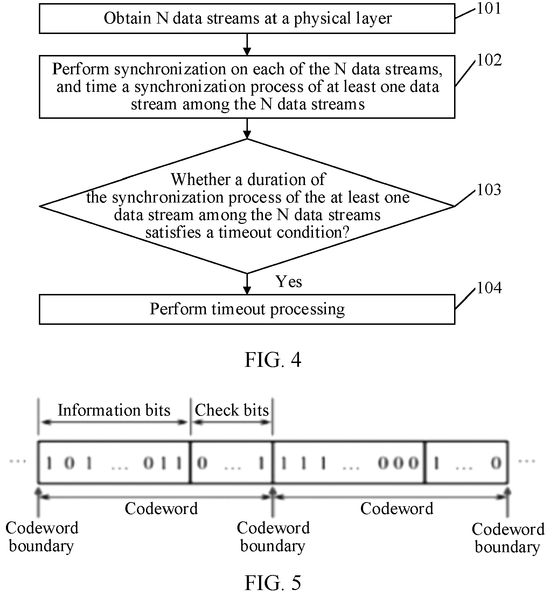

FIG. 4 is a schematic flowchart of a data synchronization method according to an embodiment of this application.

101: Obtain N data streams at a physical layer.

It should be noted that the data synchronization method provided in this embodiment of this application may be performed at a data transmitter of a channel or a data receiver of a channel, and is applicable to any scenario in which synchronization is performed on data streams at the physical layer. In an example, the method may be implemented by the transmitter processing module 02 shown in FIG. 1. The transmitter processing module 02 receives N outer-encoded data streams that are transmitted by the transmitter device 01. The transmitter processing module 02 first synchronizes the N data streams, and then performs data processing including inner encoding, and then transmits the data streams to a channel for transmission. In another example, the method may be implemented by the receiver processing module 04 or the receiver device 05 shown in FIG. 1. The receiver processing module 04 receives N data streams transmitted through a channel. The receiver processing module 04 first synchronizes the N data streams, and then performs data processing including inner decoding, and then transmits the data streams to the receiver device 05. The receiver device 05 first synchronizes the N data streams from the receiver processing module 04, and then performs data processing including outer decoding.

It should be understood that a specific quantity of the N data streams is not limited in this embodiment of this application, and N is an integer greater than or equal to 1, for example, 8, 16, or 32. The N data streams may be physical medium attachment (Physical Medium Attachment, PMA) lane data streams, physical coding sublayer (Physical Coding Sublayer, PCS) data streams, FEC lane data streams, physical lane data streams, or the like. This is not specifically limited herein. In a scenario in which N is greater than 1, the N data streams may be associated with each other. For example, the N data streams are obtained by distributing (distribution) one data stream.

102: Perform synchronization on each of the N data streams, and time a synchronization process of at least one of the N data streams.

In this embodiment of this application, each of the N data streams is synchronized independently, and data synchronization operations at the physical layer include but are not limited to frame synchronization (for example, DSP frame synchronization), codeword synchronization, symbol synchronization, interleaving synchronization, and the like. It should be understood that specific implementation of the data synchronization operations is not limited in this embodiment of this application. Optionally, data synchronization (sync) in embodiments of this application may also be referred to as data locking (lock), data alignment (align), or the like. For ease of description, the following uses a data receiver of a channel as an example to describe several possible data synchronization operations at the physical layer.

In a first example, each data frame in the N data streams sent by the transmitter includes a frame header having a fixed quantity of bits. The frame header may also be referred to as an alignment marker (Alignment marker), a frame alignment signal (frame alignment signal, FAS), or other names. The receiver performs frame synchronization on the received data stream to determine a boundary (boundary) of each data frame in the data stream, which may also be understood as determining a synchronization position of the frame. That is, once the boundary or the synchronization position of each data frame in the data stream is determined, frame synchronization is completed.

In a second example, the transmitter performs FEC encoding operations on a to-be-transmitted data stream, where the encoding operations include outer encoding and inner encoding. FIG. 5 is a diagram of an FEC codeword according to an embodiment of this application. As shown in FIG. 5, a FEC encoded codeword (codeword) includes original information bits and check bits obtained through FEC encoding. The receiver performs codeword synchronization on the received data stream, to determine a boundary of each codeword in the data stream, which may also be understood as determining a synchronization position of the codeword. That is, once the boundary or the synchronization position of each codeword in the data stream is determined, codeword synchronization is completed.

In a third example, a value of an outer code length is measured in symbols (symbol), where a symbol may include one or more bits, and the symbol herein may also be referred to as a symbol group. For example, the outer code is a KP4 RS(544,514) code, the code length N is 544 symbols, and one symbol includes 10 bits. The receiver performs symbol synchronization on the received data stream, to determine a boundary of each symbol in the data stream, which may also be understood as determining a synchronization position of the symbol. That is, once the boundary or the synchronization position of each symbol in the data stream is determined, symbol synchronization is completed.

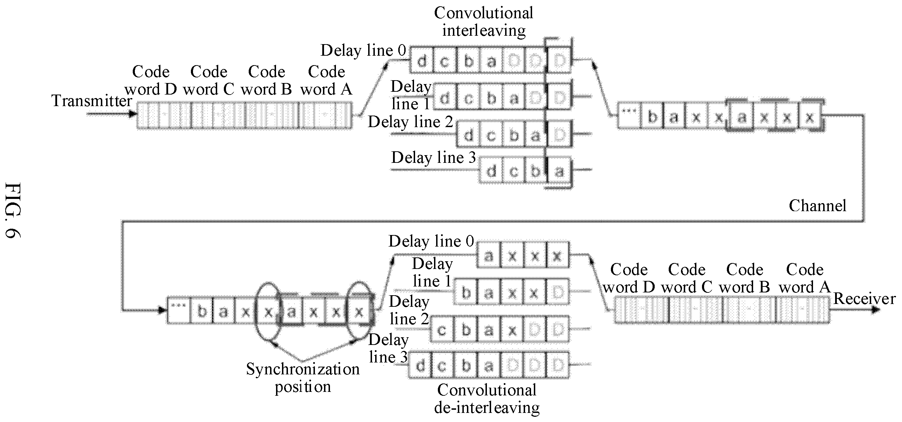

In a fourth example, the transmitter performs an interleaving operation on a to-be-transmitted data stream, where the interleaving operation includes, but is not limited to, convolutional interleaving and block interleaving. FIG. 6 is a diagram of an implementation of convolutional interleaving according to an embodiment of this application. As shown in FIG. 6, a convolutional interleaver includes multiple delay lines. Herein, four delay lines are taken as an example. Each delay line includes a different quantity of storage units, and each storage unit is configured to store a same quantity of symbols. The storage unit may also be referred to as a delay block. A square on each delay line in FIG. 6 is used to represent a storage unit. On an input side of the convolutional interleaver, there are four FEC encoded codewords, which are denoted as codeword A, codeword B, codeword C, and codeword D. On an output side of the convolutional interleaver, there is a convolutionally interleaved data stream. A switchable connection switch is provided on each of the input and output sides of the convolutional interleaver, for simultaneously connecting to a specific delay line. Symbols of the FEC codewords enter the convolutional interleaver column by column, one codeword after another. Each time one FEC symbol enters from the input side of the convolutional interleaver, one symbol is output from the output side of the convolutional interleaver. Then, the switches on both sides are switched to a next delay line, cycling the delay lines according to their numbers (0, 1, 2, 3, 0, 1, 2, 3, 0, 1, ...) in a round-robin fashion. Since the convolutional interleaver is divided into multiple delay lines, and the respective delay lines have different lengths, during de-interleaving at the receiver, delays used for the respective delay lines are also different. A sequence number of each delay line needs to be strictly distinguished so that data can be correctly restored. This is equivalent to finding delay line 0 and determining synchronization positions at which delay line 0 appears periodically. Positions marked by circles in FIG. 6 are the synchronization positions that need to be found. This may also be understood as finding a start position of each column of the convolutional de-interleaver, that is, determining an interleaving start position of each data stream through interleaving synchronization. That is, once the interleaving start position of the data stream is determined, interleaving synchronization is completed.

It should be noted that, for each physical-layer data synchronization operation, there is a corresponding synchronization start time, which specifically depends on an actual application of each data synchronization operation and is not limited herein. For example, for frame synchronization, a time at which a receiver device is powered on may be used as a start time of frame synchronization. As another example, for codeword synchronization, an end time of link training (link training) may be used as a start time of codeword synchronization. Any time period from a start of synchronization of each data stream until synchronization is completed may be considered as a synchronization process of the data stream. That is, from the start of synchronization until completion of synchronization is a complete synchronization process, and any time period between the start of synchronization and the completion of synchronization is a partial synchronization process, both of which belong to the synchronization process of the data stream. Therefore, timing starting from any moment in the synchronization process of the data stream may be understood as timing the synchronization process of the data stream. It should be understood that, in a scenario in which N is greater than 1, synchronization start times of multiple data streams are usually the same. Certainly, in some possible scenarios, synchronization start times of the multiple data streams may alternatively be not exactly the same, but such a time difference is very small and can usually be ignored.

In some possible implementations, the synchronization process of the data stream may be timed by a timer (timer), and a threshold may be set for the timer so as to facilitate determining whether synchronization of the data stream times out. A timing mode of the timer may be forward timing starting from 0, or may be countdown timing starting from a specified threshold, which is not specifically limited herein. In another possible implementation, the synchronization process of the data stream may alternatively be timed by a counter (counter). For example, the counter may count a quantity of bits, a quantity of symbols, or a quantity of data blocks that have been transmitted or received in the data stream since the synchronization process began, which achieves the same effect as timing the synchronization process of the data stream. As another example, each count of the counter corresponds to a fixed duration, and a duration of the synchronization process is determined by counting a quantity of counts. It should be understood that the foregoing timer and counter may each be implemented in hardware or software, which is not specifically limited herein.

103: Determine whether a duration of the synchronization process of the at least one of the N data streams satisfies a timeout condition, and if yes, perform step 104.

It should be noted that multiple possible timeout conditions are designed in embodiments of this application, and are described below separately. For ease of description, the following descriptions are given by taking, as an example, a timer for which a threshold is set. If a counter is used for timing, a threshold may likewise be set in a similar manner. The threshold set for the timer may be specified by a standard or may be user-defined. The threshold may be an integer or a non-integer, and may alternatively be any value within a value range, which is not limited herein. In addition, the threshold itself may allow an error margin. For example, if the threshold is 80 ms and a 2% timing error is allowed, the threshold may be represented as 80±1.6 ms or 80 ms±2%.

In a first possible implementation, a timer is started after any one of the N data streams completes synchronization. If the timer expires (timer expired) and the remaining N-1 data streams other than the first one of the N data streams that has completed synchronization have not yet completed synchronization, it is determined that the timeout condition is satisfied. It may be understood that the timer is used to time synchronization processes of the remaining N-1 data streams other than the first one of the N data streams that has completed synchronization. Optionally, the remaining N-1 data streams having not yet completed synchronization means that at least one data stream among the remaining N-1 data streams has not yet completed synchronization.

In a second possible implementation, a first threshold is set for synchronization processes of the N data streams . In a scenario in which N=1, if a duration of the synchronization process of the data stream is greater than or equal to the first threshold, it is determined that the timeout condition is satisfied. In a scenario in which N>1, if an overall duration of the synchronization processes of the N data streams is greater than or equal to the first threshold, that is, when the timer reaches the first threshold from a synchronization start time of the N data streams and at least one data stream still has not completed synchronization, it is determined that the timeout condition is satisfied. It should be understood that the N data streams may start synchronization simultaneously, or may start synchronization at different times. The timer may start timing from a synchronization start time of a 1^{st} data stream that starts synchronization.

In a third possible implementation, for a scenario in which N>1, N timers are used to time synchronization processes of the N data streams respectively, and each data stream corresponds to one threshold. Each timer starts timing from a synchronization start time of the corresponding data stream. The N thresholds may all be the same, or may be different from one another. If a duration of the synchronization process of at least one of the N data streams is greater than or equal to the corresponding threshold, it is determined that the timeout condition is satisfied.

In a fourth possible implementation, for a scenario in which N>1, there necessarily exists a data stream whose synchronization process takes the longest time, and one timer may be used with a second threshold being set. Assuming that the N data streams start their synchronization processes simultaneously, if a duration of the synchronization process of the data stream whose synchronization process takes the longest time is greater than or equal to the second threshold, that is, when the timer reaches the second threshold from a synchronization start time of the N data streams and the data stream whose synchronization process takes the longest time has not yet completed synchronization, it is determined that the timeout condition is satisfied.

In a fifth possible implementation, for a scenario in which N>1, there necessarily exists the first one of the N data streams that has completed synchronization, that is, a data stream whose synchronization process takes the shortest time, and one timer may be used with a third threshold being set. If a duration of the synchronization process of the first one of the N data streams that has completed synchronization is greater than or equal to the third threshold, that is, when the timer reaches the third threshold from a synchronization start time of the N data streams and no data stream has yet completed synchronization, it is determined that the timeout condition is satisfied.

In a sixth possible implementation, for a scenario in which N>1, a timer 1 with a third threshold set and a timer 2 with a fourth threshold set may be used. The timer 1 starts timing from a synchronization start time of the N data streams, and the timer 2 starts timing from a synchronization completion time of the first one of the N data streams that has completed synchronization. That is, the timer 2 is equivalent to timing synchronization processes of the remaining N-1 data streams other than the first one of the N data streams that has completed synchronization. Similar to the fourth implementation, if a duration of the synchronization process of the first one of the N data streams that has completed synchronization is greater than or equal to the third threshold, that is, when the timer 1 reaches the third threshold from the synchronization start time of the N data streams and no data stream has yet completed synchronization, it is determined that the timeout condition is satisfied. In addition, if a duration of the synchronization processes of the remaining N-1 data streams is greater than or equal to the fourth threshold, that is, when the timer 2 reaches the fourth threshold and at least one data stream still has not completed synchronization, it is determined that the timeout condition is satisfied. It should be understood that, because a synchronization completion time of the first one of the N data streams that has completed synchronization is uncertain, the fourth threshold set for the timer 2 may also flexibly vary according to actual conditions. In other words, starting from the synchronization completion time of the first one of the N data streams that has completed synchronization, there is a difference between a time consumed by the synchronization processes of the remaining N-1 data streams and a time consumed by the synchronization process of the first one of the N data streams that has completed synchronization. As the difference gradually increases, if the difference is greater than or equal to the fourth threshold, it is determined that the timeout condition is satisfied.

It should be noted that, among the several implementations provided above, any one implementation may be used as an implementation for determining whether the timeout condition is satisfied. In some possible scenarios, the several implementations provided above may also be combined for comprehensive determination. As an example, if satisfaction of the timeout condition is determined by at least one of the implementations, it may finally be determined that the timeout condition is satisfied. As another example, if satisfaction of the timeout condition is determined by one implementation, but non-satisfaction of the timeout condition is determined by another implementation, a further determination rule may be designed on this basis to determine whether the timeout condition is finally satisfied. The specific determination rule depends on actual requirements and is not limited herein. For example, if satisfaction of the timeout condition is determined by the fourth implementation above, and non-satisfaction of the timeout condition is determined by the fifth implementation above, it is still determined that the timeout condition is satisfied; conversely, it is determined that the timeout condition is not satisfied. That is, whether the overall synchronization processes of the N data streams times out is usually used as a priority criterion.

Several possible application scenarios are described below in conjunction with the multiple implementations provided above.

It should be noted that data streams to be transmitted may have multiple rate modes, for example, 10 gigabits per second (gigabits per second, Gbps), 25 Gbps, 40 Gbps, 50 Gbps, 100 Gbps, 200 Gbps, 400 Gbps, 800 Gbps, and 1.6 terabits per second (terabits per second, Tbps). Depending on different rate modes, scenarios in which transmission is performed through N data streams at a physical layer may be different, that is, a value of N may be 8, 16, 32, or the like. Depending on different positions of the N data streams at the physical layer, the N data streams may be PCS lane data streams, PMA lane data streams, FEC lane data streams, physical lane data streams, or the like. Corresponding synchronization operations may be performed based on different types of lane data streams, which is not limited herein. For example, codeword synchronization may be performed on PCS lane data streams.

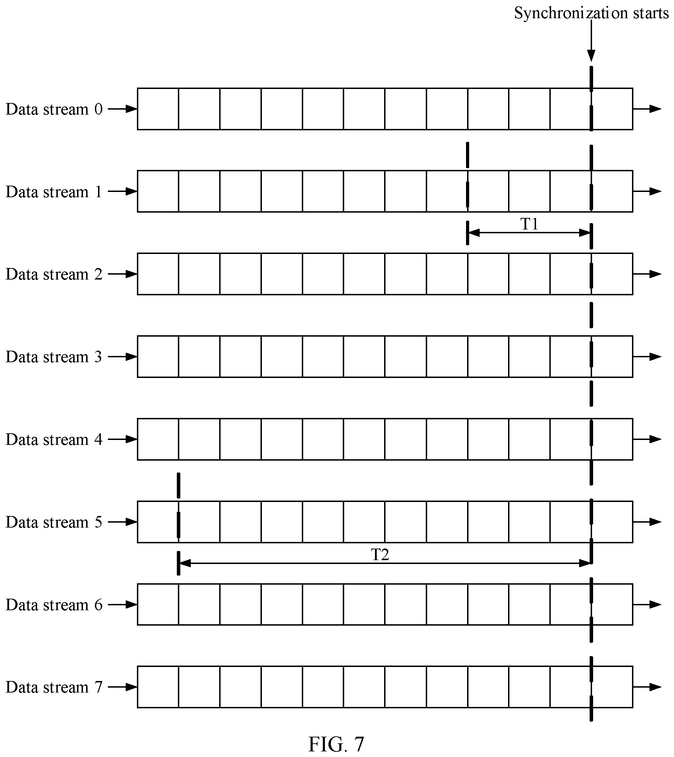

FIG. 7 is a diagram of a first application scenario of synchronization of multiple data streams according to an embodiment of this application. As shown in FIG. 7, codeword synchronization is respectively performed on 8 data streams, and the 8 data streams start codeword synchronization at the same time. A timer starts timing from a codeword synchronization start time of the 8 data streams. As an example, a threshold T1 is set for the timer, and the threshold T1 is a maximum synchronization-process duration set for a first one of the eight data streams to complete codeword synchronization. Data stream 1 is the data stream that first completes codeword synchronization. If data stream 1 still has not completed codeword synchronization when the timer reaches the threshold T1, it is determined that the timeout condition is satisfied. As another example, a threshold T2 is set for the timer, and the threshold T2 is a maximum synchronization-process duration set for the remaining 7 data streams other than data stream 1. If, when the timer reaches the threshold T2, at least one data stream still has not completed codeword synchronization, it is determined that the timeout condition is satisfied. For example, data stream 5 is the data stream whose codeword synchronization takes the longest time. If data stream 5 still has not completed codeword synchronization when the timer reaches the threshold T2, it is determined that the timeout condition is satisfied. As still another example, if data stream 1 completes codeword synchronization before the timer reaches the threshold T1, but data stream 5 still has not completed codeword synchronization when the timer reaches the threshold T2, it is determined that the timeout condition is satisfied. For example, the threshold T1=2 ms, and the threshold T2=3.2 ms.

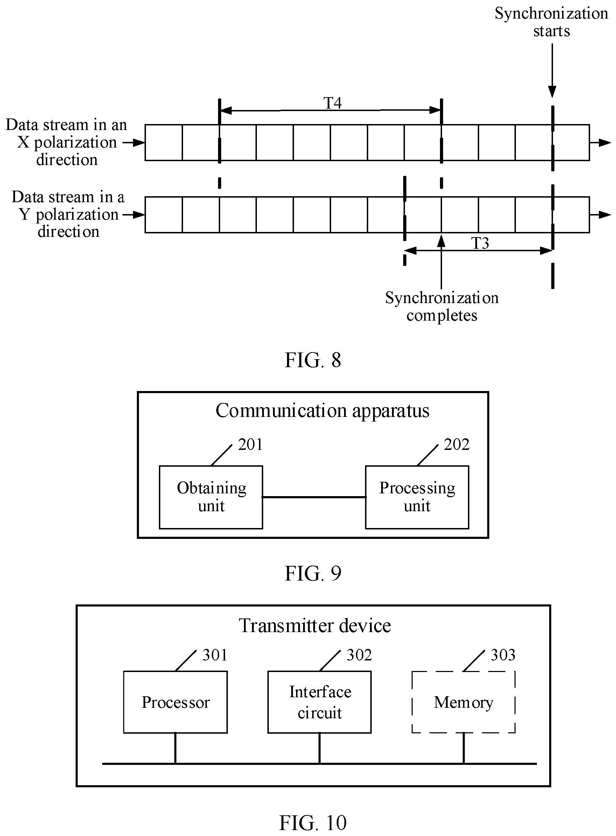

FIG. 8 is a diagram of a second application scenario of synchronization of multiple data streams according to an embodiment of this application. As shown in FIG. 8, after symbol mapping and polarization demultiplexing are performed by the transmitter on data streams, dual-polarization symbol streams are formed. One dual-polarization symbol may be represented by two symbols, one of which is located on an X polarization direction and the other on a Y polarization direction. Therefore, this scenario includes a data stream in the X polarization direction and a data stream in the Y polarization direction, and the X polarization direction and the Y polarization direction are orthogonal to each other. Data frames in the data streams in the two polarization directions have a same structure. A frame header of a fixed length is inserted in the data streams at every fixed number of bits, that is, each data frame includes a frame header and a fixed number of bits. A process of searching for a frame header of a data frame in a data stream is a process of performing frame synchronization on the data stream. Due to differences between the polarization directions, a skew (skew) may occur between the data stream in the X polarization direction and the data stream in the Y polarization direction during link transmission. At the receiver, the data streams in the X polarization direction and the Y polarization direction need to be synchronized and aligned respectively before data can be correctly recovered. The data streams in the X polarization direction and the Y polarization direction start synchronization at the same time, and a timer 1 starts timing from a synchronization start time of the two data streams. A threshold T3 is set for the timer 1, and the threshold T3 is a maximum synchronization-process duration set for the first one of the N data streams that has completed synchronization. If no data stream has completed synchronization when the timer 1 reaches the threshold T3, it is determined that the timeout condition is satisfied. If the data stream in the Y polarization direction completes synchronization before the timer 1 reaches the threshold T3, a timer 2 starts timing from a time at which the data stream in the Y polarization direction completes synchronization. A threshold T4 is set for the timer 2. If the data stream in the X polarization direction still has not completed synchronization when the timer 2 reaches the threshold T4, it is determined that the timeout condition is satisfied. For example, the threshold T3=20 ms, and the threshold T4=15.6 ms.

104: Perform timeout processing.

If it is determined that the duration of the synchronization process of the at least one of the N data streams satisfies the timeout condition, timeout processing needs to be performed. The timeout processing manner includes, but is not limited to, reporting an error, resetting a system, rebooting equipment, and restarting synchronization. As an example, a message may be generated based on the determination process of step 103, where the message is used to indicate a data stream that satisfies the timeout condition, and the message is sent to an upper layer.

From the foregoing description it can be learned that, in scenarios of synchronizing data streams at the physical layer, embodiments of this application provide the data synchronization method capable of timing synchronization processes of data streams. Further, it is determined whether there is a data stream whose synchronization-process duration satisfies the timeout condition, which is equivalent to determining whether there is a case in which synchronization takes an excessively long time. If such a case exists, it indicates that a system fault or link degradation may have occurred, and corresponding timeout processing needs to be performed, for example, error reporting and system reset, so that the system fault or link degradation can be addressed in a timely manner, thereby improving data transmission efficiency.

FIG. 9 is a diagram of a structure of a communication apparatus according to an embodiment of this application. As shown in FIG. 9, the communication apparatus includes an obtaining unit 201 and a processing unit 202. The obtaining unit 201 is configured to perform the operation in step 101, and the processing unit 202 is configured to perform the operations in step 102 to step 104. It should be understood that the communication apparatus provided in this embodiment of this application may be implemented in other manners. For example, the foregoing division of units in the communication apparatus is merely logical function division and may be other division during actual implementation. For example, multiple units or components may be combined or integrated into another system. In addition, functional units in embodiments of this application may be integrated into one processing unit, or each of the functional units may be an independent physical unit, or two or more functional units may be integrated into one processing unit. The foregoing integrated unit may be implemented in a form of hardware, or may be implemented in a form of a software functional unit.

It should be noted that the communication apparatus may be specifically a transmitter device, or may be a receiver device. Further, the transmitter device may be specifically a host module or an optical module at the transmitter side, and the receiver device may be specifically a host module or an optical module at the receiver side.

FIG. 10 is a diagram of a structure of a transmitter device according to an embodiment of this application. As shown in FIG. 10, the transmitter device includes a processor 301 and an interface circuit 302. The processor 301 is configured to perform the operations in step 101 to step 104, and perform data processing on a synchronized data stream. The interface circuit 302 is configured to transmit, through a channel, the processed data stream. It should be understood that the interface circuit 302 may be a transceiver or an input/output interface. The interface circuit 302 is configured to receive signals from an apparatus other than the transmitter device and transmit the signal to the processor 301, or transmits signals from the processor 301 to an apparatus other than the transmitter device. Optionally, the transmitter device may further include a memory 303, where the memory 303 is configured to store program instructions and data.

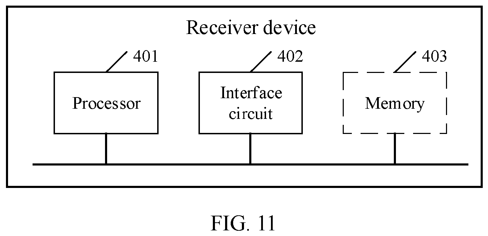

FIG. 11 is a diagram of a structure of a receiver device according to an embodiment of this application. As shown in FIG. 11, the receiver device includes a processor 401 and an interface circuit 402. The interface circuit 402 is configured to receive a data stream transmitted through a channel. The processor 401 is configured to perform operations in step 101 to step 104, and perform data processing on a synchronized data stream. It should be understood that the interface circuit 302 may be a transceiver or an input/output interface, and the interface circuit 402 is configured to receive signals from an apparatus other than the receiver device and transmit the signals to the processor 401, or transmits signals from the processor 401 to an apparatus other than the receiver device. Optionally, the receiver device may further include a memory 403, where the memory 403 is configured to store program instructions and data.

An embodiment of this application further provides a chip. The chip includes one or more interface circuits, and further integrates a processing circuit configured to implement functions of the processor 301 or the processor 401. In an example, a memory is integrated into the chip. In another example, when no memory is integrated into the chip, the chip may be connected to an external memory through an interface. The chip can implement the method steps in any one or more of the foregoing embodiments. Alternatively, the chip implements, based on program code stored in the memory, the actions performed by the data processing apparatus in the foregoing embodiments.

An embodiment of this application further provides a computer-readable storage medium, including a program or instructions. When the program or the instructions are executed by a computer, the method performed by the processor 301 or the processor 401 in the foregoing method embodiments is implemented.

It should be understood that the processor mentioned in embodiments of this application may be implemented by hardware or software. When the processor is implemented by hardware, the processor may be a logic circuit, an integrated circuit, or the like. When the processor is implemented by software, the processor may be a general-purpose processor, and is implemented by reading software code stored in the memory.

In an example, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor, or may be a processing circuit that implements a specific function.

In embodiments of this application, the memory may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an ASIC. In addition, the ASIC may be located in a network device or a terminal device. Certainly, the processor and the storage medium may alternatively exist in the network device or the terminal device as discrete components.

All or some of the foregoing embodiments may be implemented by using software, hardware, firmware, or any combination thereof.

When the data processing method is implemented by using hardware, the data processing method provided in embodiments of this application may not require reading software code or instructions. For example, the method may be implemented using a CPU, a DSP, an ASIC, an FPGA, another programmable logic device, a transistor logic device, a hardware component, or any combination thereof.

When software is used to implement embodiments, all or some of the embodiments may be implemented in a form of a computer program product. The computer program product includes one or more computer programs or instructions. When the computer programs or the instructions are loaded and executed on a computer, the procedures or functions in embodiments of this application are fully or partially performed. The computer may be a general-purpose computer, a dedicated computer, a computer network, a network device, a terminal device, or another programmable apparatus. The computer programs or the instructions may be stored in a computer-readable storage medium or may be transmitted from the computer-readable storage medium. The computer-readable storage medium may be any usable medium accessible by a computer, or a data storage device, such as a server or a data center, integrating one or more usable media. The usable medium may be a magnetic medium such as a floppy disk, a hard disk, or a magnetic tape, or may be an optical medium such as a digital versatile disc (Digital Versatile Disc, DVD), or may be a semiconductor medium such as a solid state drive (solid state drive, SSD).

Finally, it should be noted that, the foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application should be subject to the protection scope of the claims.

## Claims

1. A data synchronization method, wherein the method is performed at an Ethernet physical layer and comprises:
obtaining N data streams at a physical layer, wherein N is an integer greater than or equal to 1;
performing synchronization on each of the N data streams, and timing a synchronization process of at least one of the N data streams; and
if a duration of the synchronization process of the at least one of the N data streams satisfies a timeout condition, performing timeout processing.

2. The method according to claim 1, wherein N>1, and timing the synchronization process of the at least one of the N data streams comprises:
starting a timer upon completion of synchronization of the first one of the N data streams that has completed synchronization, wherein the timer is used to time synchronization processes of the remaining N-1 data streams other than the first one of the N data streams that has completed synchronization; and
the duration of the synchronization process of the at least one of the N data streams satisfying the timeout condition comprises:
the timer expires, and synchronization of the N-1 data streams has not been completed.

3. The method according to claim 1, wherein the duration of the synchronization process of the at least one of the N data streams satisfying the timeout condition comprises:
an over duration of synchronization processes of the N data streams is greater than or equal to a first threshold.

4. The method according to claim 1 or 3, wherein N>1, and timing the synchronization process of the at least one of the N data streams comprises:
timing a synchronization process of each of the N data streams; and
the duration of the synchronization process of the at least one of the N data streams satisfying the timeout condition comprises:
the duration of the synchronization process of the at least one of the N data streams is greater than or equal to a corresponding threshold.

5. The method according to claim 1, 3, or 4, wherein N>1, and the duration of the synchronization process of the at least one of the N data streams satisfying the timeout condition comprises:
a duration of a synchronization process of a data stream whose synchronization process takes the longest time among the N data streams is greater than or equal to a second threshold, and/or a duration of a synchronization process of the first one of the N data streams that has completed synchronization is greater than or equal to a third threshold.

6. The method according to claim 1, wherein N>1, and timing the synchronization process of the at least one of the N data streams comprises:
timing a synchronization process of the first one of the N data streams that has completed synchronization, and starting, from a synchronization completion time of the first one of the N data streams that has completed synchronization, timing synchronization processes of the remaining N-1 data streams other than the first one of the N data streams that has completed synchronization; and
the duration of the synchronization process of the at least one of the N data streams satisfying the timeout condition comprises:
a duration of the synchronization process of the first one of the N data streams that has completed synchronization is greater than or equal to a third threshold, and/or a duration of the synchronization processes of the N-1 data streams is greater than or equal to a fourth threshold.

7. The method according to claim 1, wherein N>1, and the duration of the synchronization process of the at least one of the N data streams satisfying the timeout condition comprises:
a duration of a synchronization process of the first one of the N data streams that has completed synchronization is greater than or equal to a third threshold, and/or a difference obtained by subtracting the duration of the synchronization process of the first one of the N data streams that has completed synchronization from a duration of a synchronization process of a data stream whose synchronization process takes the longest time among the N data streams is greater than or equal to a fourth threshold.

8. The method according to any one of claims 1 to 7, wherein the N data streams comprise a data stream in a first polarization direction and a data stream in a second polarization direction, and the first polarization direction and the second polarization direction are orthogonal to each other.

9. The method according to any one of claims 1 to 8, wherein performing synchronization on each of the N data streams comprises at least one of the following operations:
performing frame synchronization on each of the N data streams to determine a frame boundary of each of the data streams;
performing codeword synchronization on each of the N data streams to determine a codeword boundary of each of the data streams;
performing interleaving synchronization on each of the N data streams to determine an interleaving start position of each of the data streams; and
performing symbol synchronization on each of the N data streams to determine a symbol group boundary of each of the data streams.

10. The method according to any one of claims 1 to 9, wherein timing the synchronization process of the at least one of the N data streams comprises:
timing the synchronization process of the at least one of the N data streams by using a timer.

11. The method according to any one of claims 1 to 10, wherein timing the synchronization process of the at least one of the N data streams comprises:
counting, by using a counter, a quantity of bits, a quantity of symbols, or a quantity of data blocks that have passed since a start of the synchronization process of the at least one of the N data streams, to time the synchronization process of the at least one of the N data streams.

12. The method according to any one of claims 1 to 11, wherein performing timeout processing comprises:
reporting an error, resetting a system, restarting a device, and/or restarting synchronization.

13. The method according to any one of claims 1 to 12, wherein after performing synchronization on each of the N data streams, the method further comprises:
performing data processing on the N synchronized data streams, and transmitting, through a channel, the N processed data streams.

14. The method according to any one of claims 1 to 12, wherein obtaining the N data streams at the physical layer comprises:
receiving the N data streams transmitted through a channel; and
after performing synchronization on each of the N data streams, the method further comprises:
performing data processing on the N synchronized data streams.

15. A communication apparatus, comprising an obtaining unit and a processing unit, wherein
the obtaining unit is configured to obtain N data streams at a physical layer, wherein N is an integer greater than or equal to 1; and
the processing unit is configured to: perform synchronization on each of the N data streams, and time a synchronization process of at least one of the N data streams; and
if a duration of the synchronization process of the at least one of the N data streams satisfies a timeout condition, perform timeout processing.

16. The communication apparatus according to claim 15, wherein N>1, and the processing unit is specifically configured to start a timer upon completion of synchronization of the first one of the N data streams that has completed synchronization, wherein the timer is used to time synchronization processes of the remaining N-1 data streams other than the first one of the N data streams that has completed synchronization; and
the duration of the synchronization process of the at least one of the N data streams satisfying the timeout condition comprises:
the timer expires, and synchronization of the N-1 data streams has not been completed.

17. The communication apparatus according to claim 15, wherein the duration of the synchronization process of the at least one of the N data streams satisfying the timeout condition comprises:
a duration of synchronization processes of the N data streams is greater than or equal to a first threshold.

18. The communication apparatus according to claim 15 or 17, wherein N>1, and the processing unit is specifically configured to time a synchronization process of each of the N data streams; and
the duration of the synchronization process of the at least one of the N data streams satisfying the timeout condition comprises:
the duration of the synchronization process of the at least one of the N data streams is greater than or equal to a corresponding threshold.

19. The communication apparatus according to claim 15, 17, or 18, wherein N>1, and the duration of the synchronization process of the at least one of the N data streams satisfying the timeout condition comprises:
a duration of a synchronization process of a data stream whose synchronization process takes the longest time among the N data streams is greater than or equal to a second threshold, and/or a duration of a synchronization process of the first one of the N data streams that has completed synchronization is greater than or equal to a third threshold.

20. The communication apparatus according to claim 15, wherein N>1, and the processing unit is specifically configured to time a synchronization process of the first one of the N data streams that has completed synchronization, and start, from a synchronization completion time of the first one of the N data streams that has completed synchronization, timing synchronization processes of the remaining N-1 data streams other than the first one of the N data streams that has completed synchronization; and
the duration of the synchronization process of the at least one of the N data streams satisfying the timeout condition comprises:
a duration of the synchronization process of the first one of the N data streams that has completed synchronization is greater than or equal to a third threshold, and/or a duration of the synchronization processes of the N-1 data streams is greater than or equal to a fourth threshold.

21. The communication apparatus according to claim 15, wherein N>1, and the duration of the synchronization process of the at least one of the N data streams satisfying the timeout condition comprises:
a duration of a synchronization process of the first one of the N data streams that has completed synchronization is greater than or equal to a third threshold, and/or a difference obtained by subtracting the duration of the synchronization process of the first one of the N data streams that has completed synchronization from a duration of a synchronization process of a data stream whose synchronization process takes the longest time among the N data streams is greater than or equal to a fourth threshold.

22. The communication apparatus according to any one of claims 15 to 21, wherein the N data streams comprise a data stream in a first polarization direction and a data stream in a second polarization direction, and the first polarization direction and the second polarization direction are orthogonal to each other.

23. The communication apparatus according to any one of claims 15 to 22, wherein the processing unit is specifically configured to perform at least one of the following operations:
performing frame synchronization on each of the N data streams to determine a frame boundary of each of the data streams;
performing codeword synchronization on each of the N data streams to determine a codeword boundary of each of the data streams;
performing interleaving synchronization on each of the N data streams to determine an interleaving start position of each of the data streams; and
performing symbol synchronization on each of the N data streams to determine a symbol group boundary of each of the data streams.

24. The communication apparatus according to any one of claims 15 to 23, wherein the processing unit is specifically configured to time the synchronization process of the at least one of the N data streams by using a timer.

25. The communication apparatus according to any one of claims 15 to 23, wherein the processing unit is specifically configured to count, by using a counter, a quantity of bits, a quantity of symbols, or a quantity of data blocks that have passed since a start of the synchronization process of the at least one of the N data streams, to time the synchronization process of the at least one of the N data streams.

26. The communication apparatus according to any one of claims 15 to 25, wherein the processing unit is specifically configured to report an error, reset a system, restart a device, and/or restart synchronization.

27. The communication apparatus according to any one of claims 15 to 26, wherein the communication apparatus further comprises a sending unit;
the processing unit is further configured to perform data processing on the N synchronized data streams; and
the sending unit is configured to transmit, through a channel, the N processed data streams.

28. The communication apparatus according to any one of claims 15 to 26, wherein the obtaining unit is specifically configured to receive the N data streams transmitted through a channel; and
the processing unit is further configured to perform data processing on the N synchronized data streams.

29. A chip, wherein the chip comprises a processor, and the processor is configured to perform the method according to any one of claims 1 to 14.

30. An optical module, wherein the optical module comprises a processor and an interface circuit, the interface circuit is configured to send and receive data, and the processor is configured to perform the method according to any one of claims 1 to 14.

31. A host module, wherein the host module comprises a processor and an interface circuit, the interface circuit is configured to send and receive data, and the processor is configured to perform the method according to any one of claims 1 to 14.

32. A transmitter device, wherein the transmitter device comprises a processor and an interface circuit, the processor is configured to perform the method according to any one of claims 1 to 13, and perform data processing on a synchronized data stream, and the interface circuit is configured to transmit, through a channel, the processed data stream.

33. A receiver device, wherein the receiver device comprises a processor and an interface circuit, the interface circuit is configured to receive a data stream transmitted through a channel, and the processor is configured to perform the method according to claim 1, 2, 3, 4, 5, 6, 7, 8, 9, 10, 11, 12, or 14, and perform data processing on a synchronized data stream.

34. A communication system, comprising the transmitter device according to claim 32 and the receiver device according to claim 33.

35. A computer-readable storage medium, wherein the computer-readable storage medium stores instructions, and when the instructions are executed by a computer, the method according to any one of claims 1 to 14 is performed.
